# EUROPEAN PATENT SPECIFICATION

(11) **EP 4 435 940 B1**
(45) Date of publication and mention of the grant of the patent: **31.12.2025**
(21) Application number: 23880202.9
(22) Date of filing: 18.10.2023
(51) Int. Cl.: H01M 50/145, H01M 50/124, H01M 50/119, H01M 50/682, H01M 50/256, H01M 10/6567, H01M 10/613, C23C 4/00, C23F 13/00, H01M 50/121, H01M 50/128, C23C 4/06, C23C 4/08, C23C 4/131, C23C 4/02

(54) **BATTERY CELL, MANUFACTURING METHOD THEREOF, AND DIRECT WATER-COOLING BATTERY MODULE COMPRISING THE SAME**
BATTERIEZELLEN, HERSTELLUNGSMETHODE UND BATTERIEMODUL MIT DIREKTER WASSERKÜHLUNG, DIE DIESE ZELLE UMFASST.
CELLULE DE BATTERIE, MÉTHODE DE FABRICATION ET MODULE DE BATTERIE À REFROIDISSEMENT DIRECT PAR L'EAU COMPRENANT CETTE CELLULE.

(30) Priority: 18.10.2022 KR 20220134064
(43) Date of publication of application: 25.09.2024
(73) Proprietor: LG Energy Solution, Ltd., Seoul 07335 (KR)
(72) Inventor: JUNG, Min Yong, Daejeon 34122 (KR); CHOI, Bum, Daejeon 34122 (KR); KEUM, Jong Yoon, Daejeon 34122 (KR)
(74) Representative: Plasseraud IP
(86) International application number: PCT/KR2023/016094
(87) International publication number: WO 2024/085625

(56) References cited:
- CN-A- 104 756 285
- JP-A- 2011 175 942
- JP-A- 2014 103 026
- KR-A- 20150 006 103
- KR-A- 20180 112 715
- KR-B1- 102 295 082

## Description

### Technical Field

The present invention relates to a battery cell capable of improving corrosion resistance of the battery cell by using a sacrificial metal having a higher metal ionization tendency than that of a battery cell case, a manufacturing method thereof, and a direct water-cooling battery module comprising the same.

This application claims the benefit of priority based on Korean Patent Application No. 10-2022-0134064 dated October 18, 2022.

### Background Art

Batteries used in eco-friendly vehicles generate a large amount of heat because high power is required, and to improve battery performance and lifespan, it is very important to efficiently discharge heat generated from the battery, thereby preventing the batteries from overheating.

Conventionally, as a cooling system for dissipating heat from a battery, a direct aircooling method, an indirect water-cooling method, or a direct water-cooling method is known.

The direct water-cooling method is a method in which battery cells are directly immersed in cooling water, and heat from the battery cells is directly discharged into the cooling water.

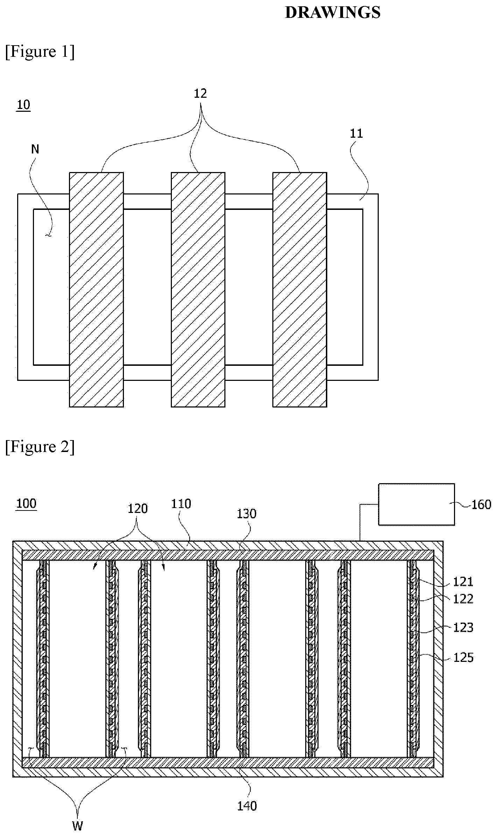

Figure 1 is a schematic configuration diagram of a conventional battery module (10).

Referring to Figure 1, a direct water-cooling type battery module (10) consists of a cell frame (11) and a plurality of battery cells (12). The plurality of battery cells (12) is spaced apart from each other in the cell frame (11). The cell frame (11) is provided so that cooling water can flow therein.

Generally, in the battery cell (12), an exterior case accommodating internal electrodes is made of nickel-plated iron. Accordingly, when the battery cell (12) is directly impregnated with cooling water, it is vulnerable to corrosion due to the material characteristics of the exterior case. In addition, there is a problem that the exterior case is polar, and has vulnerable electrical insulation.

To prevent corrosion of the battery cell (12) in the battery module (10) of the conventional direct water-cooling method, insulating oil or special cooling water (N) (e.g., 3M's NOVEC) is used.

However, the insulating oil has a problem of being vulnerable to fire, and the special cooling water such as 3M's NOVEC is excellent as a coolant for battery cells in that it is nonpolar and has corrosion resistance, but it is expensive, whereby there is a problem of increasing the manufacturing cost of the battery module.

Also, when an antirust liquid is applied to the exterior case of the battery cell (12) to prevent corrosion of the battery cell (12) as in the conventional art, a post-treatment process of covering the exterior case of the battery cell (12) using a non-woven fabric is required to maintain the antirust liquid.

In addition, even if the antirust liquid is applied to the exterior case of the battery cell (12), the antirust agent flows down from the exterior case of the battery cell due to surface tension, whereby there is a problem that the antirust agent is not evenly applied to the exterior case.

### Disclosure

### Technical Problem

The present invention is intended to provide a battery cell capable of improving corrosion resistance of a battery cell by using a sacrificial metal having a higher metal ionization tendency than that of a battery cell case, a manufacturing method thereof, and a direct water-cooling battery module comprising the same.

### Technical Solution

To solve the above problem, a battery cell according to claim 1 comprises an electrode assembly, a metal case accommodating the electrode assembly, a plating layer formed on an outer surface of the case, a scratch region formed by removing a partial region of the plating layer, and a porous coating layer provided to surround the scratch region and containing a sacrificial material having a higher metal ionization tendency than that of the plating layer.

Also, the scratch region may comprise a plurality of non-plated portions that a partial region of the plating layer is removed therefrom and a plated portion in which the plating layer remains between two adjacent non-plated portions.

In addition, the porous coating layer may be provided so that as at least a partial region is inserted into the scratch region, it contacts the outer surface of the case through the non-plated portions.

Furthermore, in the porous coating layer, the thickness of the region surrounding the plating layer may be smaller than the thickness of the region surrounding the scratch region.

Also, the porous coating layer may be formed as the sacrificial metal is sprayed onto the scratch region.

In addition, the plating layer may be a nickel-plating layer, and the sacrificial metal may be one or more selected from the group consisting of aluminum, magnesium, zinc, an aluminum alloy, a magnesium alloy, and a zinc alloy.

Furthermore, the scratch region may be provided as the plating layer is subjected to scratch treatment by a laser.

Also, the battery cell may further comprise a waterproof sheet including a polymer film and surrounding the porous coating layer.

In addition, the battery module related to one example of the present invention comprises a plurality of battery cells, a cell frame provided so that the plurality of battery cells is disposed apart from each other, and cooling water allows to flow between the plurality of battery cells, and a cooling water supply part for supplying cooling water into the cell frame.

Furthermore, the cooling water supply part is provided to supply cooling water without insulating treatment.

Also, the method for manufacturing the battery cell related to one example of the present invention comprises a step (a) of forming the scratch region on the plating layer provided on the outer surface of the case, and a step (b) of forming the porous coating layer covering the scratch region by spraying the molten sacrificial metal onto the scratch region together with compressed air.

In addition, the scratch region may be formed to comprise a plurality of non-plated portions that a partial region of the plating layer is removed and a plated portion in which the plating layer remains between two adjacent non-plated portions.

Furthermore, the porous coating layer may be formed so that at least a partial region contacts the outer surface of the case through the non-plated portions.

Also, the compressed air may be sprayed at a pressure ranging from 12000psi to 16000psi.

In addition, the compressed air may be sprayed at a rate ranging from 2000m/s to 2200m/s.

Furthermore, in the step (a), the scratch region may be formed by removing the plating layer by a laser.

In addition, the method for manufacturing the battery cell may further comprise a step of heat-shrinking a waterproof film on the case so that the porous coating layer is not exposed to the outside after the step (b).

### Advantageous Effects

As described above, a battery cell related to at least one example of the present invention, a manufacturing method thereof, and a direct water-cooling battery module comprising the same have the following effects.

By providing the scratch region in the plating layer of the case and allowing the porous coating layer to cover the scratch region, it is possible to facilitate electron migration between the porous coating layer and the outer surface of the case from which the plating layer has been removed through the scratch region, and accordingly, it is possible to improve corrosion resistance of the case.

Also, as the sacrificial metal having a higher ionization tendency than that of the case is subjected to an ionization reaction with moisture before the case to be oxidized, it is possible to improve corrosion resistance of the case.

In addition, by spraying the molten sacrificial metal into the case together with high-pressure compressed air, it is possible to form a porous coating layer covering the scratch region, and by increasing the bonding force between the porous coating layer and the case, it is possible to improve durability of the case.

Furthermore, as the porous coating layer is formed by a thermal spray coating method, it can have a microporous structure, and accordingly, it is possible to increase a contact area in contact with moisture and air.

Also, by facilitating electron migration between the case and the porous coating layer through the scratch region, it is possible to promote stability of the electrical connection between the case and the porous coating layer.

In addition, by improving the corrosion resistance of the battery cell, it is possible to implement a direct water-cooling method using low-cost general cooling water without insulating treatment, rather than expensive special cooling water with insulating treatment.

### Description of Drawings

Figure 1 is a schematic configuration diagram of a conventional battery module.
Figure 2 schematically illustrates a configuration diagram of a direct water-cooling battery module according to one example of the present invention.
Figures 3 to 5 schematically illustrate cross-sectional diagrams of a battery cell according to one example of the present invention.
Figures 6 to 10 are diagrams for explaining a manufacturing method of a battery cell according to one example of the present invention.
Figure 11 is a schematic diagram showing a thermal spray coating device used in a battery cell manufacturing method.

### Mode for Invention

Hereinafter, a battery cell (hereinafter, also referred to as a 'direct water-cooling battery cell') according to one example of the present invention, a manufacturing method thereof, and a direct water-cooling battery module (hereinafter, also referred to as a 'battery module') comprising the same will be described in detail with reference to the drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

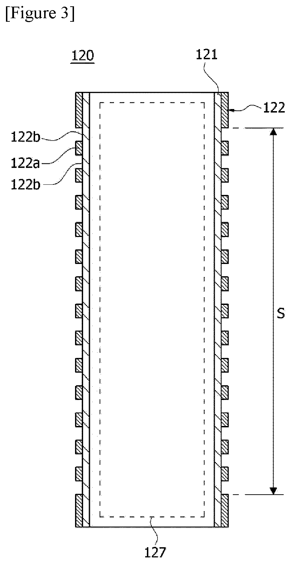

Figure 2 schematically illustrates a configuration diagram of a direct water-cooling battery module (100) according to one example of the present invention, and Figures 3 to 5 schematically illustrate cross-sectional diagrams of a battery cell (120) according to one example of the present invention.

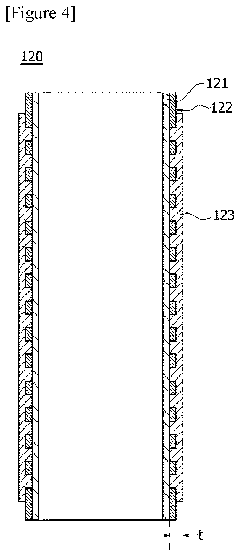

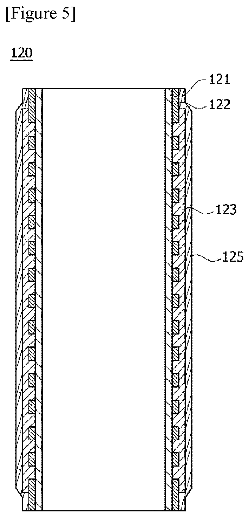

Specifically, Figure 3 shows a case in a state provided with a scratch region, Figure 4 shows a case in a state where a porous coating layer is formed, and Figure 5 shows a case in a state provided with a waterproof sheet covering the porous coating layer.

As shown in Figure 2, the direct water-cooling battery module (100) according to one example of the present invention comprises a cell frame (110), at least one direct water-cooling battery cell (120), and general coolant (W).

Referring to Figure 2, the battery module (100) according to one example of the present invention comprises a plurality of battery cells (120), a cell frame (110) accommodating the plurality of battery cells (120), and a cooling water supply part (160).

Specifically, the battery module (100) comprises a plurality of battery cells (120), a cell frame (110) provided so that the plurality of battery cells (120) is disposed apart from each other, and cooling water (W) allows to flow between the plurality of battery cells (120), and a cooling water supply part (160) for supplying cooling water (W) into the cell frame (110).

The battery module (100) may have a direct water-cooling structure directly cooling the battery cell (120) through cooling water (W).

Referring to Figure 2, the cell frame (110) has a predetermined space part therein, and is provided in a structure in which cooling water (W) can flow within the space part. The cooling water (W) may be supplied to the inner space part of the cell frame (110), and then discharged to the outside of the cell frame (110). To this end, the battery module (100) may comprise a cooling water discharge part for discharging the cooling water (W) to the outside of the cell frame (110). In addition, the cooling water supply part (160) may comprise a cooling water storage tank and a pump. In addition, the cooling water supply part (160) may be provided to supply cooling water (W) that is not insulated. The general cooling water (W) may be cooling water generally used in vehicles.

Referring to Figures 3 to 5, the battery cell (120) according to one example of the present invention comprises an electrode assembly (127), a case (121), a plating layer (122), a scratch region (S) provided on the plating layer (122), and a porous coating layer (123) surrounding the scratch region (S).

In addition, the battery cell (120) may comprise a waterproof sheet (125) including a polymer film and provided to surround the porous coating layer (123).

The battery cell (120) comprises an electrode assembly (127), a case (121) accommodating the electrode assembly (127), a plating layer (122) formed on an outer surface of the case (121), a scratch region (S) formed by removing a partial region of the plating layer (122), and a porous coating layer (123) provided to surround the scratch region (S) and containing a sacrificial metal having a higher metal ionization tendency than that of the plating layer (122).

Referring to Figure 2, when the direct water-cooling battery cell (120) is immersed in the cooling water (W), the moisture may be transferred to the porous coating layer (123). At this time, the sacrificial metal of the porous coating layer (123) can improve the corrosion resistance of the case (121) because the ionization reaction of the metal to moisture is greater than the metal ionization reaction to moisture in the case (121).

In addition, when the direct water-cooling battery cell (120) is immersed in the cooling water (W), the moisture of the cooling water (W) is subjected to ionization reaction with the sacrificial metal of the porous coating layer due to the difference in metal ionization reaction between the case (121) and the porous coating layer (123), and as a result, the metal ionization reaction of the case (121) is suppressed, whereby the direct water-cooling battery cell (120) can prevent corrosion of the case (121).

The electrode assembly (127) is accommodated in the case (121), and comprises a positive electrode, a negative electrode, and a separator disposed between the positive electrode and the negative electrode. The electrode and the separator may constitute an integrated electrode assembly (127). For example, the electrode assembly (127) may be a jelly-roll type electrode assembly in which sheet-type positive and negative electrodes are wound in a state where a separator is interposed therebetween, a stack type electrode assembly in which pluralities of positive and negative electrodes are sequentially stacked in a state where a separator is interposed therebetween, or a stack/folding type electrode assembly in which unit cells obtained by stacking positive and negative electrodes in predetermined units in a state where a separator is interposed therebetween are sequentially wound in a state where they are positioned on a separation film.

In addition, the case (121) serves to accommodate the electrode assembly (127), and to protect the battery cell (120) from external impacts. The case (121) may be cylindrical, pouch, or angular, and for example, the case (121) may be cylindrical. In particular, the electrode assembly (127) may be a rolled jelly-roll type electrode assembly, the case (121) may be a cylindrical case, and the direct water-cooling battery cell (120) may be a cylindrical battery cell.

Also, the case (121) is formed of a metal material, and the case (121) may be formed of one or more selected from the group consisting of steel or stainless steel.

In addition, the surface of the case (121) may be nickel (Ni)-plated. That is, the plating layer (121) may comprise a nickel-plating layer.

Meanwhile, the nickel-plating layer has little discoloration, excellent rust resistance force, and excellent corrosion resistance and wear resistance. However, due to material characteristics, the nickel-plating layer may be corroded when immersed in cooling water, and as the corrosion progresses, polarity is generated and simultaneously insulation properties are deteriorated.

Meanwhile, when the porous coating layer (123) is provided on the plating layer (121), the plating layer (121) may be a factor that hinders the movement of electrons between the porous coating layer (123) and the case (121).

The scratch region (S) is formed on the plating layer (121), and then the porous coating layer (123) is coupled to the scratch region (S), whereby electron movement between the porous coating layer (123) and the case (121) can be made smoothly.

Also, the scratch part (S) may also be formed by removing a partial region of the plating layer (121) along the thickness direction of the plating layer (121), and the scratch part (S) may be formed up to a partial region of the plating layer (121) along the thickness direction of the plating layer (121), and an outer surface of the case facing the partial region.

Referring to Figure 3, the scratch region (S) may comprise a plurality of non-plated portions (122b) that a partial region of the plating layer (122) has been removed and a plated portion (122a) in which the plating layer remains between two adjacent non-plated portions (122b). Also, the non-plated portion (122b) may mean a region where the outer surface of the case (121) is exposed to the outside because there is no plating layer in the relevant region. In addition, the scratch region (S) may be formed in a partial region of the plating layer (122).

The scratch region (S) is a region where the plating layer (122) of the case (121) has been partially removed according to a predetermined pattern. In addition, the scratch region (S) may be provided as the plating layer (122) is subjected to scratch treatment by a laser. Alternatively, the scratch region (S) may also be provided as the plating layer (122) is subjected to etching treatment.

Referring to Figure 4, the porous coating layer (123) surrounds the plating layer (122) and the scratch region (S), and at least a partial region is inserted into the scratch region (S).

Also, the porous coating layer (123) may be provided so that as at least a partial region is inserted into the scratch region (S), it contacts the outer surface of the case (121) through the non-plated portions (121b).

In addition, in the porous coating layer (123), the thicknesses (t) of the region surrounding the plating layer (122) and the region surrounding the scratch region (S) may be different. In the porous coating layer (123), the thickness of the region surrounding the plating layer (122) may be smaller than the thickness of the region surrounding the scratch region (S).

The porous coating layer (123) is formed of a sacrificial metal material with a greater ionization tendency than that of the case (121). The sacrificial metal may contain one or more selected from the group consisting of aluminum, magnesium, zinc, an aluminum alloy, a magnesium alloy, and a zinc alloy.

Since the ionization tendency of the sacrificial metal is greater than the ionization reaction of steel or stainless steel, which is the material of the case (121), the moisture in the general cooling water (W) performs the ionization reaction with the sacrificial metal in the porous coating layer (123) before the ionization reaction with the case (121).

In addition, the porous coating layer (123) may be formed as the sacrificial metal is sprayed onto the scratch region (S).

As one example, the porous coating layer (123) may be coated on the outer surface of the case (121) using a thermal spray coating method. The porous coating layer (123) may have a porous structure as the molten sacrificial metal is sprayed into the case (121) together with compressed air. The porous coating layer (123) may have a pore size of 1µm to 10µm.

In addition, as the porous coating layer (123) formed of the sacrificial metal has a porous structure, it has an effect of increasing the contact area with moisture and air, and the sacrificial metal, which has a higher ionization tendency than that of the case, first reacts with moisture.

Referring to Figure 5, the waterproof sheet (125) surrounds the outer surface of the case (121) so that the porous coating layer (123) is not exposed to the outside. The waterproof sheet (125) may comprise a polymer film. In a state where the case is surrounded by the polymer film, the waterproof sheet (125) may be heat-compressed to the case (121) by heat-shrinking the polymer film.

The heat-shrinkable polymer film may comprise one or more selected from the group consisting of polyvinylchloride (PVC), polypropylene (PP), or polyethylene terephthalate (PET).

Referring to Figure 2, the battery module (100) may comprise a waterproof layer (130, 140) provided inside the cell frame (110), and provided to cover the upper end and the lower end of the battery cell (120), respectively. The waterproof layer (130, 140) performs a function of preventing moisture from permeating into the case (121) and fixing the battery cell (120) to the cell frame (110).

An upper waterproof layer (130) may be provided on the upper end of the case (121), and a lower waterproof layer (140) may be provided on the lower end of the case (121). In addition, the upper end side, and the lower end side of the battery cell (120) may be integrally fixed to the inner surface of the cell frame (110) through the waterproof layer (130, 140), respectively.

In addition, the waterproof layer (130, 140) may comprise a waterproof adhesive or a potting resin, and the potting resin may be any one of a silicone-based resin, a urethane-based resin, and an epoxy-based resin.

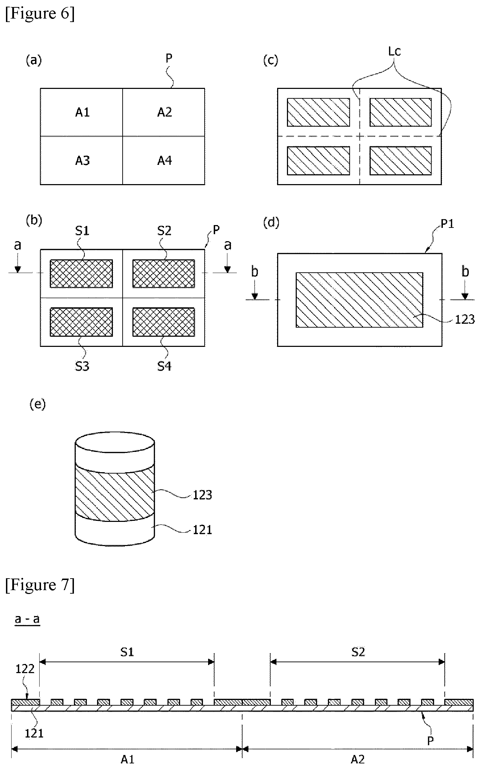

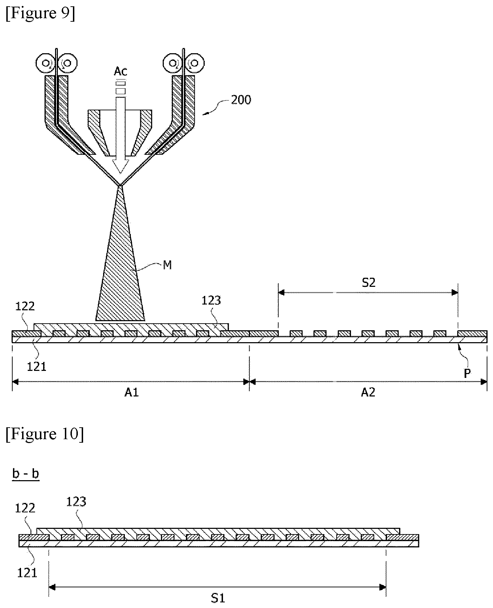

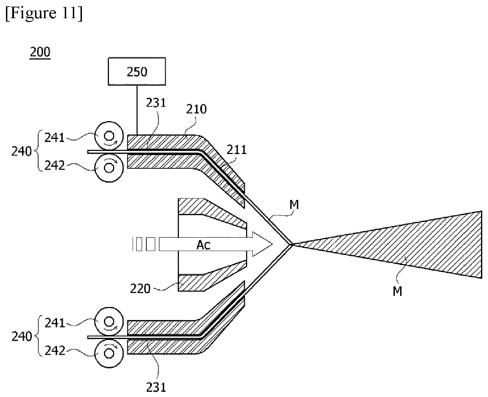

Figures 6 to 10 are diagrams for explaining a manufacturing method of a battery cell according to one example of the present invention, and Figure 11 is a schematic diagram showing a thermal spray coating device used in a battery cell manufacturing method. In addition, Figure 7 is a cross-sectional diagram taken along the line a-a in Figure 6(b), and Figure 9 is a cross-sectional diagram taken along the line b-b in Figure 6(d).

As described above, the porous coating layer (123) may be coated on the outer surface of the case (121) using a thermal spray coating method.

Also, the method for manufacturing the battery cell related to one example of the present invention comprises a step (a) of forming the scratch region on the plating layer provided on the outer surface of the case, and a step (b) of forming the porous coating layer covering the scratch region by spraying the molten sacrificial metal onto the scratch region together with compressed air.

In addition, the scratch region (S) may be formed to comprise a plurality of non-plated portions that a partial region of the plating layer (122) is removed and a plated portion in which the plating layer remains between two adjacent non-plated portions.

Furthermore, the porous coating layer (123) may be formed so that at least a partial region contacts the outer surface of the case (121) through the non-plated portions.

Referring to Figures 6 and 7, a plate (P) having a metal material is prepared. The plate (P) may be formed of one or more selected from the group consisting of steel or stainless steel. The plate (P) is processed into a case (121), and a plating layer (122) is formed on one side (the outer surface of the case) of the plate (P).

The plating layer (122) is formed by plating a plating material (e.g., nickel) onto one side of the plate (P).

Referring to Figure 6(a), one plate (P) is divided into several unit regions (A1 to A4). Here, the respective unit regions (A1 to A4) constitute unit plates that are processed into the case (121), respectively. That is, each unit region has a size that can be manufactured to the case (121). In this example, for convenience of explanation, the respective unit regions virtually partitioned on the plate (P) are separately referred to as a first unit region (A1) to a fourth unit region (A4).

Referring to Figures 6(c) and 6(d), the respective unit regions are cut along cutting lines (Lc), thereby being divided into unit plates (P), and referring to Figure 6(e), the respective unit plates (P1) may each be processed into a cylindrical shape to be and manufactured into a case (121).

Referring to Figure 6(b), scratch regions (S1 to S4) are provided in the respective unit regions (A1 to A4), respectively.

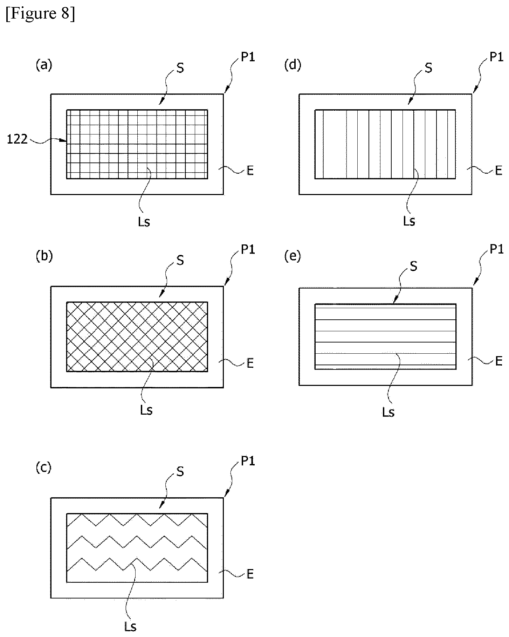

The scratch regions (S1 to S4) are regions where the plating layer (122) of the case (121) is subjected to etching treatment by a chemical method according to a predetermined scratch pattern (Ls, see Figure 8), or the plating layer (122) is scratched by a laser. In the scratch region (S), the outer surface (non-plated portion) of the case (121) is provided to be exposed to the outside.

In addition, the scratch region (S) is provided in each unit region (A1 to A4). In this document, the scratch regions (S) of the respective unit regions (A1 to A4) are separately referred to as a first scratch region (S1) to a fourth scratch region (S4).

Here, the first scratch region (S1) is a region where in the first unit region (A1), the plating layer (122) is damaged, and the second scratch region (S2) is a region where in the second unit region (A2), the plating layer (122) is damaged.

Also, the third scratch region (S3) is a region where in the third unit region (A3), the plating layer (122) is damaged, and the fourth scratch region (S4) is a region where in the fourth unit region (A4), the plating layer (122) is damaged.

In addition, the first scratch region (S1) to the fourth scratch region (S4) are provided on the same plane of the plate (P), which may be spaced apart from each other.

Furthermore, each scratch region (S1 to S4) may have a smaller area than that of each unit region (A1 to A4).

Referring to Figure 8, the unit plate (P1) may have a scratch pattern (Ls), where the scratch pattern may be any one of a regular grid pattern (see Figure 8(a)), a diagonal grid pattern (see Figure 8(b)), a wave pattern (see Figure 8(c)), a horizontal straight pattern (see Figure 8(d)), or a vertical straight pattern (see Figure 8(e)).

According to this scratch pattern, the scratch region (S) may comprise a plurality of non-plated portions that a partial region of the plating layer (122) is removed therefrom and a plated portion in which the plating layer remains between two adjacent non-plated portions.

The scratch region (S) in each unit plate (P1) may also be provided to be surrounded by an edge region (E) of the unit plate (P1), or may also be provided on the entire region of one side of the unit plate (P1). The edge region (E) is a region where the non-plated portion of the plating layer (122) is not exposed to the outside and only the plated portion is exposed to the outside.

Referring to Figures 9 and 11, the thermal spray coating device (200) sprays the molten sacrificial metal (M) onto one side of the plate (P), on which the scratch region (S) is provided, together with compressed air (Ac). Referring to Figure 10, the sacrificial metal (M) forms a porous coating layer (123) surrounding the scratch region (S1).

Referring to Figure 11, the thermal spray coating device (200) comprises a metal spray part (210), an air spray part (220), a guide part (240), and a heating part (250).

The guide part (240) supplies a sacrificial metal wire (231) to the metal spray part (210), and is installed in an entry path through which the sacrificial metal wire (231) enters the metal spray part (210). The guide part (240) may comprise a pair of guide rolls (241, 242). The pair of guide rolls (241, 242) allows the sacrificial metal wire (231) to enter a passage (211) of the metal spray part (210), and guides the movement of the sacrificial metal wire (231), while rotating in opposite directions.

The metal spray part (210) is electrically connected to the heating part (250). The heating part (250) applies a voltage to the metal spray part (210).

Also, the metal spray part (210) is provided with a passage (211) through which the sacrificial metal wire (231) passes. The sacrificial metal wire (231) is melted while passing through the heated metal spray part (210).

In addition, depending on the type of sacrificial metal, the heating temperature of the metal spray part (210) may vary. For example, the melting temperature of aluminum (Al) is approximately 660°C, and the melting temperature of magnesium (Mg) is approximately 650°C.

The air spray part (220) sprays compressed air (Ac). The air spray part (220) may be installed inside the metal spray part (210). The air spray part (220) may be disposed in the metal spray part (210) such that the central axis of the outlet of the air spray part (220) is coaxial with the central axis of the outlet of the metal spray part (210).

In addition, the compressed air (Ac) is sprayed from the thermal spray coating device (200) together with the molten sacrificial metal (M). The compressed air (Ac) may be sprayed at a pressure ranging from 12,000psi to 16,000psi, and the compressed air (Ac) may be sprayed at a rate ranging from 2,000m/s to 2,200m/s.

The molten sacrificial metal (M) flows along the passage (211) of the metal spray part (210) to be discharged to the outside of the metal spray part (210), and is sprayed onto the plate (P) by the compressed air (Ac) discharged from the air spray part (220).

The molten sacrificial metal (M) is sprayed onto the scratch region (S) together with compressed air (Ac), and plated on the plate (P) so that the non-plated portion of the scratch region (S) is not exposed to the outside.

Referring to Figure 9, the thermal spray coating device (200) may spray the molten sacrificial metal (M) into the first scratch region (S1), and this process may be performed for each of the second unit region (A2) to the fourth unit region (A4).

The porous coating layer (123) is formed as the molten sacrificial metal (M) is sprayed onto the outer surface of the case (121) together with high-pressure compressed air (Ac). Accordingly, the bonding force between the porous coating layer (123) and the case (121) can be increased. That is, as the molten sacrificial metal (M) particles are sprayed onto the outer surface of the case (121) together with high-pressure compressed air (Ac), the porous coating layer (123) may be formed.

Through such a process, as shown in Figure 6(c), a plurality of porous coating layers (123) covering the first scratch region (S1) to the fourth scratch region (S4), respectively may each be provided in one plate (P).

One plate (P) is cut for each unit region (A1 to A4) along the cutting lines (Lc), thereby forming a plurality of unit plates (P1). The unit plate (P1) provided with the porous coating layer (123) is processed into a cylindrical shape, and manufactured into a cylindrical case (121).

In this way, the manufacturing process of a large quantity of cases (121) can be simplified.

Through the thermal spray coating method, the porous coating layer (123) can have a microporous structure, and the contact area of the sacrificial metal in contact with moisture and air can be increased.

### Industrial Applicability

According to a battery cell related to one example of the present invention, a manufacturing method thereof, and a direct water-cooling battery module comprising the same, as the sacrificial metal having a higher ionization tendency than that of the case is subjected to an ionization reaction with moisture before the case to be oxidized, it is possible to improve corrosion resistance of the case.

## Claims

1. A battery cell (120) comprising:
an electrode assembly (127);
a metal case (121) accommodating the electrode assembly (127);
a plating layer (122) formed on an outer surface of the case (121);
a scratch region (S) formed by removing a partial region of the plating layer (122); an d
a porous coating layer (123) provided to surround the scratch region (S) and containin g a sacrificial material having a higher metal ionization tendency than that of the plating layer (122).

2. The battery cell (120) according to claim 1, wherein
the scratch region (S) comprises a plurality of non-plated portions (122b) that a partia 1 region of the plating layer (122) is removed therefrom and a plated portion (122a) in which t he plating layer (122) remains between two adjacent non-plated portions (122b).

3. The battery cell (120) according to claim 2, wherein
the porous coating layer (123) is provided so that at least a partial region contacts the outer surface of the case (121) through the non-plated portions (122b).

4. The battery cell (120) according to claim 2, wherein
in the porous coating layer (123), the thickness of the region surrounding the plating 1 ayer (122) is smaller than the thickness of the region surrounding the scratch region (S).

5. The battery cell (120) according to claim 1, wherein
the porous coating layer (123) is formed as the sacrificial metal is sprayed onto the sc ratch region (S).

6. The battery cell (120) according to claim 1, wherein
the plating layer (122) is a nickel-plating layer, and
the sacrificial metal is one or more selected from the group consisting of aluminum, m agnesium, zinc, an aluminum alloy, a magnesium alloy, and a zinc alloy.

7. The battery cell (120) according to claim 1, wherein
the scratch region (S) is provided as the plating layer (122) is subjected to scratch trea tment by a laser.

8. The battery cell (120) according to claim 1,
further comprising a waterproof sheet (125) including a polymer film and surroundin g the porous coating layer (123).

9. A battery module comprising:
the plurality of battery cells (120) according to claim 1;
a cell frame (110) provided so that the plurality of battery cells (120) is disposed apar t from each other, and cooling water allows to flow between the plurality of battery cells (120); and
a cooling water supply part for supplying cooling water into the cell frame (110), whe rein
the cooling water supply part is provided to supply cooling water without insulating t reatment.

10. A method for manufacturing the battery cell (120) according to claim 1, comprising:
a step (a) of forming the scratch region (S) on the plating layer (122) provided on the outer surface of the case (121); and
a step (b) of forming the porous coating layer (123) covering the scratch region (S) by spraying the molten sacrificial metal onto the scratch region (S) together with compressed air.

11. The method for manufacturing the battery cell (120) according to claim 10, wherein
the scratch region (S) is formed to comprise a plurality of non-plated portions (122b) that a partial region of the plating layer (122) is removed and a plated portion (122a) in which the plating layer (122) remains between two adjacent non-plated portions (122b), and
the porous coating layer (123) is formed so that at least a partial region contacts the o uter surface of the case (121) through the non-plated portions (122b).

12. The method for manufacturing the battery cell (120) according to claim 10, wherein
the compressed air is sprayed at a pressure ranging from 12000psi to 16000psi.

13. The method for manufacturing the battery cell (120) according to claim 10, wherein
the compressed air is sprayed at a rate ranging from 2000m/s to 2200m/s.

14. The method for manufacturing the battery cell (120) according to claim 10, wherein
in the step (a), the scratch region (S) is formed by removing the plating layer (122) by a laser.

15. The method for manufacturing the battery cell (120) according to claim 10, wherein
further comprising a step of heat-shrinking a waterproof film on the case (121) so tha t the porous coating layer (123) is not exposed to the outside.

## Patentansprüche

1. Batteriezelle (120), umfassend:
eine Elektrodenanordnung (127);
ein Metallgehäuse (121), welches die Elektrodenanordnung (127) aufnimmt;
eine Plattierungsschicht (122), welche an einer äußeren Fläche des Gehäuses (121) gebildet ist;
einen Kratzbereich (S), welcher durch Entfernen eines Teilbereichs der Plattierungsschicht (122) gebildet ist; und
eine poröse Beschichtungsschicht (123), welche bereitgestellt ist, um den Kratzbereich (S) zu umgeben und ein Opfermaterial enthält, welches eine höhere Metallionisationstendenz aufweist als die der Plattierungsschicht (122).

2. Batteriezelle (120) nach Anspruch 1, wobei
der Kratzbereich (S) eine Mehrzahl von nicht plattierten Abschnitten (122b) umfasst, von welchen ein Teilbereich der Plattierungsschicht (122) entfernt ist, und einen plattierten Abschnitt (122a), in welchem die Plattierungsschicht (122) zwischen zwei benachbarten nicht plattierten Abschnitten (122b) bleibt.

3. Batteriezelle (120) nach Anspruch 2, wobei
die poröse Beschichtungsschicht (123) derart bereitgestellt ist, dass wenigstens ein Teilbereich durch die nicht plattierten Abschnitte (122b) mit der äußeren Fläche des Gehäuses (121) in Kontakt steht.

4. Batteriezelle (120) nach Anspruch 2, wobei
in der porösen Beschichtungsschicht (123) die Dicke des Bereichs, welcher die Plattierungsschicht (122) umgibt, kleiner ist als die Dicke des Bereichs, welcher den Kratzbereich (S) umgibt.

5. Batteriezelle (120) nach Anspruch 1, wobei
die poröse Beschichtungsschicht (123) gebildet wird, wenn das Opfermetall auf den Kratzbereich (S) gesprüht wird.

6. Batteriezelle (120) nach Anspruch 1, wobei
die Plattierungsschicht (122) eine Nickelplattierungsschicht ist, und
das Opfermetall eines oder mehrere ausgewählt ist, aus der Gruppe bestehend aus Aluminium, Magnesium, Zink, einer Aluminiumlegierung, einer Magnesiumlegierung und einer Zinklegierung.

7. Batteriezelle (120) nach Anspruch 1, wobei
der Kratzbereich (S) bereitgestellt wird, wenn die Plattierungsschicht (122) einer Kratzbehandlung durch einen Laser unterzogen wird.

8. Batteriezelle (120) nach Anspruch 1,
ferner umfassend einen wasserdichten Bogen (125), welcher einen Polymerfilm umfasst und die poröse Beschichtungsschicht (123) umgibt.

9. Batteriemodul, umfassend:
die Mehrzahl von Batteriezellen (120) nach Anspruch 1;
einen Zellrahmen (110), welcher derart bereitgestellt ist, dass die Mehrzahl von Batteriezellen (120) voneinander beabstandet angeordnet ist und Kühlwasser zwischen der Mehrzahl von Batteriezellen (120) durchströmen kann; und
einen Kühlwasserversorgungsteil zum Zuführen von Kühlwasser in den Zellrahmen (110), wobei
der Kühlwasserversorgungsteil bereitgestellt ist, um Kühlwasser ohne Isolationsbehandlung zuzuführen.

10. Verfahren zur Herstellung der Batteriezelle (120) nach Anspruch 1, umfassend:
einen Schritt (a) eines Bildens des Kratzbereichs (S) auf der Plattierungsschicht (122), welche an der äußeren Fläche des Gehäuses (121) bereitgestellt ist; und
einen Schritt (b) eines Bildens der porösen Beschichtungsschicht (123), welche den Kratzbereich (S) bedeckt, durch Aufsprühen des geschmolzenen Opfermetalls auf den Kratzbereich (S) zusammen mit komprimierter Luft.

11. Verfahren zur Herstellung der Batteriezelle (120) nach Anspruch 10, wobei der Kratzbereich (S) gebildet ist, um eine Mehrzahl von nicht plattierten Abschnitten (122b), von welchen ein Teilbereich der Plattierungsschicht (122) entfernt ist, und einen plattierten Abschnitt (122a) zu umfassen, in welchem die Plattierungsschicht (122) zwischen zwei benachbarten nicht plattierten Abschnitten (122b) bleibt, und
die poröse Beschichtungsschicht (123) gebildet ist, so dass wenigstens ein Teilbereich durch die nicht plattierten Abschnitte (122b) mit der äußeren Fläche des Gehäuses (121) in Kontakt steht.

12. Verfahren zur Herstellung der Batteriezelle (120) nach Anspruch 10, wobei die komprimierte Luft mit einem Druck, welcher von 12.000 psi bis 16.000 psi reicht, gesprüht wird.

13. Verfahren zur Herstellung der Batteriezelle (120) nach Anspruch 10, wobei die komprimierte Luft mit einer Geschwindigkeit, welche von 2000 m/s bis 2200 m/s reicht, gesprüht wird.

14. Verfahren zur Herstellung der Batteriezelle (120) nach Anspruch 10, wobei in dem Schritt (a) der Kratzbereich (S) durch Entfernen der Plattierungsschicht (122) mittels eines Lasers gebildet wird.

15. Verfahren zur Herstellung der Batteriezelle (120) nach Anspruch 10, wobei ferner umfassend einen Schritt eines Wärme-Schrumpfens eines wasserdichten Films auf das Gehäuse (121), sodass die poröse Beschichtungsschicht (123) nicht zu dem Äußeren ausgesetzt ist.

## Revendications

1. Élément de batterie (120) comprenant :
un ensemble d'électrodes (127) ;
un boîtier métallique (121) accueillant l'ensemble d'électrodes (127) ;
une couche de placage (122) formée sur une surface externe du boîtier (121) ;
une région de rayure (S) formée par le retrait d'une région partielle de la couche de placage (122) ; et
une couche de revêtement poreuse (123) ménagée pour encercler la zone de rayure (S) et contenant un matériau sacrificiel ayant une plus grande tendance à l'ionisation métallique que celle de la couche de placage (122).

2. Élément de batterie (120) selon la revendication 1, dans lequel
la région de rayure (S) comprend une pluralité de portions non plaquées (122b) à partir desquelles une région partielle de la couche de plaquage (122) est retirée et une portion plaquée (122a) dans laquelle la couche de plaquage (122) subsiste entre deux portions non plaquées (122b) adjacentes.

3. Élément de batterie (120) selon la revendication 2, dans lequel
la couche de revêtement poreuse (123) est ménagée de sorte qu'au moins une région partielle soit en contact avec la surface externe du boîtier (121) à travers les portions non plaquées (122b).

4. Élément de batterie (120) selon la revendication 2, dans lequel
dans la couche de revêtement poreuse (123), l'épaisseur de la région encerclant la couche de placage (122) est plus petite que l'épaisseur de la région encerclant la région de rayure (S).

5. Élément de batterie (120) selon la revendication 1, dans lequel
la couche de revêtement poreuse (123) est formée à mesure que le métal sacrificiel est pulvérisé sur la région de rayure (S).

6. Élément de batterie (120) selon la revendication 1, dans lequel
la couche de placage (122) est une couche de nickelage, et
le métal sacrificiel est l'un ou plusieurs sélectionnés parmi le groupe constitué de l'aluminium, du magnésium, du zinc, d'un alliage d'aluminium, d'un alliage de magnésium et d'un alliage de zinc.

7. Élément de batterie (120) selon la revendication 1, dans lequel
la région de rayure (S) est ménagée à mesure que la couche de placage (122) est soumise à un traitement de rayure par un laser.

8. Élément de batterie (120) selon la revendication 1,
comprenant en outre une feuille imperméable (125) comportant un film polymère et encerclant la couche de revêtement poreuse (123).

9. Module de batterie comprenant :
la pluralité d'éléments de batterie (120) selon la revendication 1 ;
un cadre d'élément (110) ménagé de sorte que la pluralité d'éléments de batterie (120) soient disposés à l'écart les uns des autres, et que de l'eau de refroidissement soit permise de s'écouler entre la pluralité d'éléments de batterie (120) ; et
une partie d'acheminement d'eau de refroidissement pour l'acheminement d'eau de refroidissement dans le cadre d'élément (110), dans lequel
la partie d'acheminement d'eau de refroidissement est ménagée pour acheminer de l'eau de refroidissement sans traitement isolant.

10. Procédé de fabrication de l'élément de batterie (120) selon la revendication 1, comprenant :
une étape (a) de formation de la région de rayure (S) sur la couche de placage (122) ménagée sur la surface externe du boîtier (121) ; et
une étape (b) de formation de la couche de revêtement poreuse (123) recouvrant la région de rayure (S) par la pulvérisation du métal sacrificiel en fusion sur la région de rayure (S) conjointement avec de l'air comprimé.

11. Procédé de fabrication de l'élément de batterie (120) selon la revendication 10, dans lequel
la région de rayure (S) est formée pour comprendre une pluralité de portions non plaquées (122b) dont une région partielle de la couche de plaquage (122) est retirée et une portion plaquée (122a) dans laquelle la couche de plaquage (122) subsiste entre deux portions non plaquées (122b) adjacentes, et
la couche de revêtement poreuse (123) est formée de sorte qu'au moins une région partielle soit en contact avec la surface externe du boîtier (121) à travers les portions non plaquées (122b).

12. Procédé de fabrication de l'élément de batterie (120) selon la revendication 10, dans lequel
l'air comprimé est pulvérisé à une pression allant de 12 000 psi à 16 000 psi.

13. Procédé de fabrication de l'élément de batterie (120) selon la revendication 10, dans lequel
l'air comprimé est pulvérisé à une vitesse allant de 2 000 m/s à 2 200 m/s.

14. Procédé de fabrication de l'élément de batterie (120) selon la revendication 10, dans lequel
à l'étape (a), la région de rayure (S) est formée par le retrait de la couche de placage (122) par un laser.

15. Procédé de fabrication de l'élément de batterie (120) selon la revendication 10, dans lequel
comprenant en outre une étape de thermorétraction d'un film imperméable sur le boîtier (121) de sorte que la couche de revêtement poreuse (123) ne soit pas exposée à l'extérieur.
